# EUROPEAN PATENT APPLICATION

(11) **EP 1 035 168 A2**
(43) Date of publication of application: **13.09.2000**
(21) Application number: 00301971.8
(22) Date of filing: 10.03.2000
(51) Int. Cl.: C08L 67/06, C08K 7/14, C08K 3/26

(54) **Plastics composition**

(30) Priority: 11.03.1999 GB 9905614
(71) Applicant: Laminated Profiles Limited, Alton Hampshire, GU34 2QF (GB)
(72) Inventor: Partridge, Ivana K., Dr., Quinton, Northampton, NN7 2DZ (GB); Cheshire, Edward John, Alresford, Hampshire, SO24 9LZ (GB)
(74) Representative: Curtis, Philip Anthony

(57) **Abstract**

A composition suitable for reinforcement with glass fibres, comprising a dicyclopentadiene polyester resin in combination with a carboxyl terminated butadiene acrylonitrile.

## Description

This invention relates to a plastics composition. More particularly the invention relates to a polyester composition suitable for reinforcement with glass fibres.

Flat glass reinforced polyester (GRP) sheet is widely used in industry for the production of sandwich panels. Because the matrix polyester resin shrinks when it cures, the reinforcing fibres are usually visible at the surface. The effect is more pronounced when sheet is cured at high temperature, typically 130°C - 150°C, because resin has a much higher coefficient of thermal expansion than glass and therefore contracts more during the subsequent cooling to ambient temperature.

The use of "Low Profile" additives are known as a method of improving surface finish. These materials include polyvinylacetate, possibly with other materials such as styrene and polymethylmethacrylate. However, polyvinylacetate in large proportions has the effect of lowering the glass transition temperature (Tg) of the matrix resin and significantly reducing the strength of the laminate at elevated temperatures. Polyvinylacetate also affects the cure of the resin and the laminate tends to smell: this is particularly undesirable, since a major market for GRP sheet is the food industry (e.g. in refrigerated vehicles) where there is a risk of tainting foodstuffs.

Furthermore, it has been found that polyvinylacetate additives do not work well at atmospheric pressure unless the temperature is close to the boiling point of styrene (which is used as a monomer in GRP), i.e. about 143°C. If the styrene boils, the finished product will be damaged. Thus, in a process operating at atmospheric pressure, there is an impracticably small operating window to use most polyvinylacetate additives

Moreover, a reaction takes place between the polyvinylacetate and the polyester resin used as a binder in powder bound chopped strand mat glass fibre reinforcement. This neutralises the low profile effect so that the laminate surface exhibits small pits at the site of binder lumps.

Dicyclopentadiene (DCPD) has been used successfully for many years in the manufacture of polymers, including polyester resins. Polyesters can be formed from DCPD by a number of different routes. One conventional route is called the Diels Alder reaction; another conventional route is by addition reaction with glycols or acids.

Polyester resins made from DCPD have a low viscosity compared with polyester resins made from other starting materials. DCPD is now used in GRP sheet partly because the low viscosity readily allows it to impregnate glass fibres, even when containing a high proportion of mineral filler. DCPD also has a slightly lower curing shrinkage than polyesters made from other starting materials. In the following description, polyester resins based on DCPD will be referred to as DCPD resin.

World Patents Index (WPI) Abstract accession no 78-18609A is an abstract of JP53008652, published 26 January 1978. This abstract describes an elastomer composition which comprises:
(1) 5-70 wt% of a copolyester obtained from a dicarboxylic acid (of which at least 50 mol% is a benzene dicarboxylic acid) and a diol with a molecular weight no greater than 300 (of which at least 70 mol% is C₃₋₁₀ aliphatic or alicylcic diol, and which contains 0-60 wt% of poly(tetramethylene oxide) glycol; and
(2) 30-95 wt% of an unvulcanised nitrile rubber containing a carboxyl group which is preferably terephthalic acid.

The composition is prepared by blending (A) and (B) at a temperature above their melting or softening points in a uniaxial or biaxial extruder, mixer, rubber roller or kneader. The rubber may be added to the molten copolyester just after polycondensation or the two may be blended in the form of a dispersion.

WPI Abstract accession no 76-96803X is an abstract of JP51128393, published 9 November 1976. This abstract describes a composition which is obtained by adding a liquid butadiene-acryonitrile copolymer containing a terminal amino group to an unsaturated polyester resin liquid which is made by dissolving unsaturated polyester in a copolymerisable monomer. The liquid butadiene-acrylonitrile copolymer may be prepared by reaction between a liquid butadiene-acrylonitrile copolymer containing a terminal carboxyl group and aminoethylpiperadiene.

WPI Abstract accession no 76-08144X is an abstract of JP50075628, published 20 June 1976. This abstract describes an unsaturated polyester composition obtained by dissolving an unsaturated ester in a copolymerisable compound with a carboxyl-containing liquid butadiene-acrylonitrile copolymer. In an example 100 parts of 1.00:1.05 (molar) fumaric acid:propylene glycol copolymer was mixed with 0.01 parts hydroquinone and 55 parts styrene to give an unsaturated polyester resin liquid which was mixed with 10% of a carboxyl containing liquid butadiene-acrylonitrile copolymer (HYCAR CTBN).

It is an object of the present invention to provide an additive which avoids the disadvantages of GRP described above. We have now found a way to improve the properties of glass reinforced sheets formed of DCPD based polyester resin. Broadly, this involves adding a carboxyl terminated butadiene acrylonitrile copolymer (CTBN) to the polyester resin.

CTBNs are used to increase the toughness of epoxy resins and in other specialist applications. The material is typically a viscous syrup like liquid with a molecular weight (Mn) in the range 3,000 to 4,000.

We have found that a suitable combination of polyester resin with CTBN and, preferably, a filler significantly reduces the shrinkage of the matrix resin and hence improves the surface finish of glass reinforced articles, such as sheets, formed from the composition. The CTBN has the additional advantage of increasing the glass transition temperature of the resin matrix by up to 20°C. Despite the high viscosity of CTBN the mixture of CTBN and DCPD based polyester resin has a sufficiently low viscosity to allow a high proportion of filler and readily impregnate the glass reinforcement. The filler reduces the curing and thermal shrinkage and thereby helps further to improve the surface finish of the sheet.

According to one aspect of the present invention we provide a composition suitable for reinforcement with glass fibres, comprising a polyester resin in combination with a CTBN. The optimum amount of the CTBN can be found by trial and error. In general, the aim is to use an amount of CTBN which minimises the linear shrinkage while maximising the Tg of the resin matrix. Typically, the composition comprises 5 to 20 parts, more preferably 5 to 15 parts, and still more preferably 5 to 10 parts of CTBN copolymer (per 100 parts polyester resin). We have found that the optimum compositions contain from 6 to 10 parts CTBN. Very good results have been obtained with 6 to 8 parts CTBN, with 7 parts being preferred. In this specifications the parts in the compositions are specified "by weight" unless stated otherwise.

The polyester resin is preferably an unsaturated polyester resin, and it is particularly preferred that the polyester resin is a DCPD resin.

The polyester resin preferably has a viscosity at 25°C of 180 to 200 cps, preferably 190 cps, measured using a RVF Brookfield Spindle #3 at 10 rpm. The specific gravity at 25°C is preferably from 1.090 to 1.100, more preferably 1.095.

One suitable DCPD resin is available under the trade name 80 D 963 from Alpha/Owens Corning Hawk Ltd. of Brightlingsea, Essex, England. This product is described in greater detail in Alpha/Owens-Corning publication no. F-AOC-00121.

The CTBN may have an acrylonitrile content from 10% to 40%, preferably from 15% to 30%, more preferably from 15% to 20%. Our preferred CTBN has an acrylonitrile content of about 18%. So far as the carboxyl content is concerned, we prefer an acid number from 25 to 40, more preferably from 25 to 30, and most preferably 29; the EPHR (equivalents per hundred rubber) is preferably from 0.040 to 0.070, more preferably from 0.045 to 0.055, and most preferably 0.052. The solubility parameter of the CTBN is preferably from 8.00 to 9.50, more preferably from 8.50 to 9.00 and most preferably 8.82 (these calculations are based on molar attraction constants). The specific gravity (25°C) is preferably from 0.900 to 0.970, more preferably from 0.940 to 0.960, and most preferably 0.948. The functionality is preferably from 1.5 to 2.5, more preferably from 1.8 to 2.4 and most preferably 1.8. The molecular weight is preferably from 3100 to 4200, more preferably from 3400 to 3800, and most preferably 3550. The glass transition temperature (measured by differential scanning calorimeter) is preferably from -80°C to -35°C, more preferably from -40°C to -60°C, and most preferably -52°C.

One especially suitable CTBN copolymer is available under the trade name Hycar Polymer 1300X8 CTBN from B.F. Goodrich of Cleveland, Ohio, U.S.A.

As mentioned above, it is preferable to provide the composition with a filler, preferably a mineral filler. The presence of the filler reduces the curing and the thermal shrinkage, thereby helping to improve the surface finish of articles made from the composition. The composition may contain, for example, up to 100 parts filler per 100 parts of resin by weight. Typically, the composition includes at least 20 parts filler. We have found that the optimum compositions contain from 20 to 80 parts filler, more preferably 20 to 70 parts filler. In general, the optimum composition contain from 50 to 80 parts filler, more preferably 50 to 70 parts filler, per 100 parts of resin, by weight (although fewer parts of filler may be preferred if the filler is provided in the form of hollow microspheres as described below).

In fact, it is the volume of the filler that is important, rather than the weight. In the present invention, we prefer that the filler comprises about 10 to 50 parts, by volume, filler per 100 parts, by volume, polyester resin. More preferably there are 15 to 40 parts, by volume, filler per 100 parts, by volume, polyester resin. Most preferably there are 20 to 30 part, by volume, filler per 100 parts, by volume, polyester resin.

Where low weight is a requirement we prefer that at least part of the filler is provided in the form of hollow microspheres. When the filler is in the form of hollow microspheres, we prefer that the majority of the spheres (and preferably over 95% of the spheres) have diameters in the range 3 to 50, more preferably 3 to 10 micrometers with density 1.0 to 1.2 g/ml. The preferred minimum particle size is 5 micrometers.

The filler may be, for example, calcium carbonate, but it will be appreciated that many other mineral fillers may be used in addition, or instead. When hollow microspheres are used, aluminosilicate is preferred.

A suitable calcium carbonate filler is available under the trade name BLR3 from Omya Croxton and Garry Ltd, of Oxted, Surrey, England. When calcium carbonate alone is used as a filler, we prefer to use 60 to 70 parts, by weight, of filler per 100 parts, by weight, polyester resin.

As mentioned above, an alternative is to use a filler in the form of hollow spheres - this makes it possible to lower the weight of the articles formed from the composition. One suitable hollow sphere filler is available under the trade name Sphericel 110P 8, from Potters Europe of Barnsley, England. When Sphericel alone is used as a filler, we prefer to use 10 to 30 parts, more preferably 20 to 30 parts, by weight, of filler per 100 parts, by weight, polyester resin. It is, of course, possible to use a combination of two or more fillers; for some applications a combination of calcium carbonate and hollow microspheres would be appropriate. An alternative filler with a larger particle size is Fillite 100 from Trellborg Fillite Ltd., of Runcorn, England.

It will be appreciated that the composition according to the invention may be provided with a number of other additives. We prefer that the composition contains an amount of a viscosity modifier: the composition may contain up to about 2 wt%, most preferably about 0.5 to 1.0 wt%, of the viscosity modifier. We also prefer that the composition contains an amount of an air release agent: the composition may comprise up to about 1.0 wt%, most preferably up to about 0.5 wt%, of the air release agent.

The viscosity modifier and the air release agent serve to improve the wetting and air release properties of the resin matrix. A suitable viscosity modifier is available under the trade name Byk S 706 from Univar Ltd. of Croydon, England, and a suitable air release agent is available under the trade name Byk A 555 also from Univar Ltd.

In some circumstances it may be desirable to include an amount of a conventional low profile additive in addition to the CTBN. The low profile additive may include polyvinylacetate, styrene and/or polymethylmethacrylate. The low profile additive may be added in amount up to about 15 parts per 100 parts polyester resin. Usually, there would not be more than 10 parts low profile additive.

The composition will also usually include at least one conventional accelerator and/or catalyst to promote curing of the polyester. The accelerator and catalyst would each normally be present in an amount of up to about 1.5 parts per 100 parts of the DCPD resin. A suitable accelerator is cobalt octoate. A suitable catalyst is HM catalyst and/or 42PR catalyst, both of which are available from AKZO UK.

The composition according to the invention may be cured by heating at a predetermined temperature for a predetermined length of time. The preferred curing temperature and time will depend upon the composition being used and the required specifications for the cured product. Suitable temperatures and curing times can easily be derived by trial and error. Typically, curing oven temperatures will be from about 80°C to 120°C, with the exotherm temperature reaching 120°C to 140°C.

Without wishing to be bound by any particular theory, it is believed that the cured composition substantially comprises a reactive blend of DCPD and CTBN. We believe that when the low profile effect occurs the parent resin becomes voided with a multiplicity of spherical holes, typically 0.01 to 0.04mm diameter. Each void is packed with a large number of very small particles, typically 0.001 to 0.005 diameter. Because these minute particles do not completely fill each spherical hole, there is an increase in the total volume of the resin mixture, which is probably what creates the low profile effect by neutralising the inherent curing shrinkage of the polyester resin.

According to another aspect of the invention there is provided a glass reinforced article comprising a mixture of a cured composition as described above in combination with glass fibres. The glass fibres may be entirely conventional, e.g., chopped strand mat, woven roving, or mixtures thereof. Typically the glass fibres comprise 15 to 40, preferably 15 to 30, parts by weight per 100 parts by weight of DCPD resin. The invention is especially suitable for producing glass reinforced plastics sheets.

It is a specific feature of the present invention to use CTBN in glass reinforced polyester sheets (ideally formed from DCPD resin) in order to reduce the linear shrinkage of the sheets and to increase the Tg of the resin matrix.

These materials can be formed into GRP sheet by techniques known in the art. One known technique utilises the "flat sheet machine". Briefly, this involves adding the resin mixture to a chopped strand sheet containing the glass fibres. The mat and resin mixture are subsequently cured, then the mat is cut into the desired size. The process is usually continuous, and the mat is usually laminated prior to curing between two polyester films; these polyester films are usually stripped away after curing.

According to another aspect of the invention there is provided a method of making a glass reinforced article comprising:
(a) forming a composition comprising a DCPD based polyester resin, a CTBN, and glass fibres;
(b) intimately mixing the components of the composition formed in step (a)
(c) curing the mixed composition formed in step (b) at a pressure no greater than 1.2 atmospheres (122 kPa).

It is preferred that the mixed composition is cured in step (c) at a temperature above 0.8 atmospheres (81 kPa), and most preferably the mixed composition is cured in step (c) at substantially atmospheric pressure (i.e. about 101 kPa). Most preferably, the entire process is carried out at substantially atmospheric pressure.

We have found that it is particularly important for the composition formed in step (a) to be intimately mixed. We have found that very good results can be achieved if the mixing step includes flowing the composition through at least one sieve in the form of a perforated plate or mesh. The open area of the sieve is preferably from 30% to 50%, more preferably from 35% to 45%. Preferably each aperture of the sieve has an area of about 0.03 mm² to about 0. 0.09 mm². We prefer to use sieves of size 20 to 100 mesh, more preferably 40 to 80 mesh, and most preferably about 60 mesh. Preferably the composition is flowed through at least two of said sieves, and most preferably the composition is flowed through three of said sieves.

Additives may be added in step (a) and/or step (b). Such additives include one or more fillers, viscosity modifiers, air release agents, conventional low profile additives, catalysts and accelerators. The type and amounts of these additives may be the same as described above.

Preferably the mixed blend is cured at a temperature in the range 80°C to 120°C. Preferably the mixed blend is cured by blowing heated air over the blend. The blend can be heated by conveying through an oven, which may be, for example, 20 to 30 metres in length. The blend can be conveyed at a rate of for example 1-3 metres/min.

Reference is now made to the accompanying drawings, in which:
Fig. 1 is a graph of linear shrinkage vs. amount of modifier (parts per hundred parts DCPD resin); and
Fig. 2 is a graph of Tg vs. amount of modifier (parts per hundred parts DCPD resin);
Fig. 3 is a schematic diagram of an apparatus for making glass reinforced article according to the method of the invention; and
Fig. 4 is a graph showing the temperature of the composition being cured in the apparatus shown in Fig. 3.

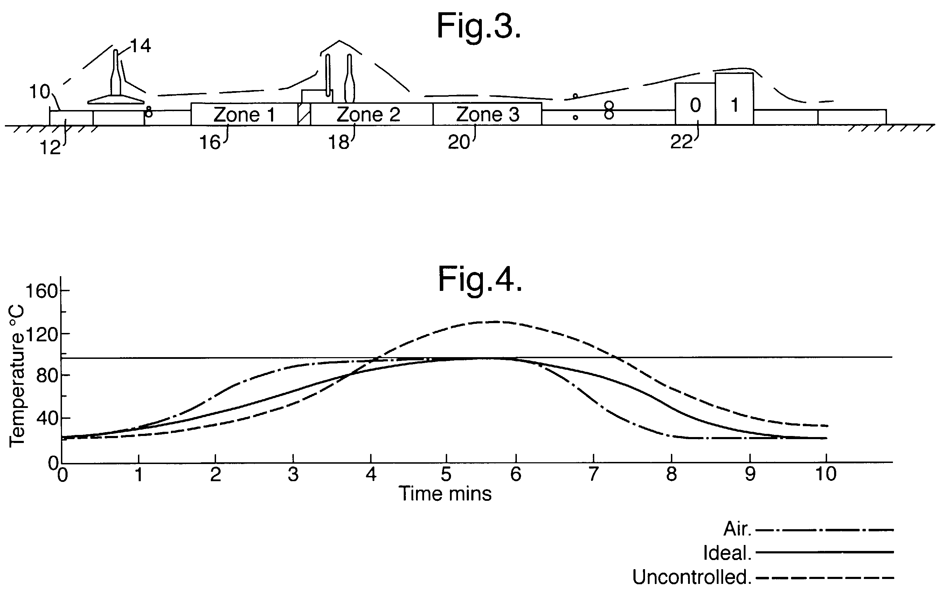

Referring to Fig. 3, a laminate 10 is shown disposed on a thermoplastic polyester conveying film 12. The laminate 10 comprises a layer of a blend of DCPD resin, CTBN, glass fibres, and additives, covered by a gelcoat of reinforced isophthalic polyester resin.

The laminate 10 is conveyed on the film 12 underneath a fume extractor 14 which extracts styrene fumes (styrene is normally present in the DCPD resin). The laminate 10 is then conveyed sequentially to three oven zones 16, 18 and 20 where hot air, at 120°C, is blown onto the laminate 10. The zones 16, 18 and 20 form a total heating zone of length 24m, for example. The blend cures in the zones 16 to 20, and is then conveyed to a cutting zone 22, where the laminate 10 is cut into the required length. The speed of conveying is typically 2-3 m/min, depending on the type of sheet and the thickness. For example, if the speed is 2 m/min, the blend will be in the oven for about 12 minutes.

Fig. 4 illustrates the way the temperature of the laminate varies as it passes through the apparatus. In Fig. 4 a straight line has been drawn at 120°C. If the temperature exceeds this level, then certain problems may occur including high shrinkage, distortion, prominence of glass fibres through the surfaces of the produced article, poor finish and undesirable color changes.

In Fig. 4, one line shows the ideal temperature, another line shows the temperature that occurs in practice with the air blowing, and another line shows the temperature that would occur if the heating were uncontrolled, i.e., if there were no air blowing.

### Example 1

The DCPD resin available under the trade name 80 D 963 (which was supplied as a liquid containing styrene) was mixed with a cobalt octoate accelerator: there were 0.8 parts accelerator per 100 parts resin. A pre-weighed amount of the filler Fillite 100, and the CTBN Hycar 1300X8 were added and stirred in by an electrical stirrer. This was followed by the addition of 0.8 parts per hundred parts resin of a catalyst consisting of 2 parts HM catalyst and 1 part 42PR catalyst, both available from AKZO UK and 1 wt% of a defoaming agent available from Univar Limited under the trade name Byk S-706.

### Example 2

Samples of the mixture of Example 1 were poured into copper troughs of semi-circular cross-section with flat ends (for shrinkage determination). The samples were then cured for one hour at a temperature of 80°C.

Then the resin mixture was altered by replacing the CTBN with a low profile additive available from Union Carbide under the trade name LPLP85D44. This low profile additive comprises a mixture of styrene, polyvinylacetate and polymethylmethacrylate. Samples of the modified mixture were poured into copper troughs of semi-circular cross-section with flat ends (for shrinkage determination). The samples were then cured for one hour at a temperature of 80° C.

We tested the cured resin for linear shrinkage and glass transition temperature. The glass transition temperature was measured using the Gabo Qualimeter which is a device used for dynamic mechanical thermal analysis. Samples measuring 10x10x5 mm were milled from the cured resins and tested in compression at a heating rate of 3°C/min, from -100°C to +180°C at a frequency of 1 Hz. The maximum tanδ is taken as the glass transition temperature.

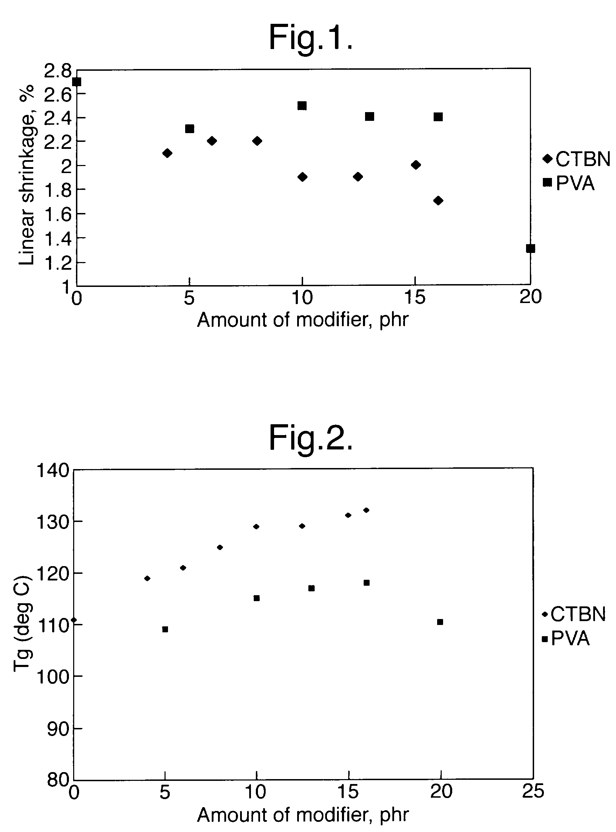

The linear shrinkages of the cured resins are illustrated in Fig. 1. It will be seen from Fig. 1 that the low profile additive does not become effective until a phase change occurs at 20 parts. On the other hand, the sheets containing the CBTN additive displayed lower linear shrinkage than the low profile additive in amounts up to 15 parts.

The glass transition temperatures of the cured resins are illustrated in Fig. 2. It will be seen from Fig. 1 that the low profile additive has little effect on Tg, and at 20 parts (when there is relatively low linear shrinkage), the Tg falls. This demonstrates that with a low profile additive it is difficult to achieve an acceptable balance between linear shrinkage and Tg. The sheets containing the CBTN additive displayed higher Tg than the sheets containing the low profile additive, and there was no difficulty in optimising both linear shrinkage and Tg simultaneously.

### Example 3

Sheet 1.5mm thick was produced on the flat sheet machine. The matrix resin mix was:-

| | |
|---|---|
| Polyester resin 80 D 963 | 100 parts |
| Filler BLR3 | 70 parts |
| CTBN 1300 8 | 8 parts |
| Cobalt accelerator (1% cobalt) | 0.9 parts |
| Air release agent Byk A555 | 0.5 parts |
| Viscosity modifier Byk S 706 | 0.7 parts |
| Catalyst HM | 0.7 parts |
| Catalyst 42PR | 0.35 parts |
| The glass fibre reinforcement was: | |
| Surface tissue | 25 gm/m² |
| Chopped strand mat | 325 gm/m² |
| Surface tissue | 25 gm/m² |

The ingredients were mixed in a 1000 litre vessel with a conical bottom and three separate mechanical mixers. The first mixer was a two bladed scraper paddle which wiped the walls of vessel and rotated at 12 rpm. The second mixer had one shaft carrying two four bladed propellers similar in appearance to those used for powering ships. These propellers were of 280mm diameter and rotated at 256 rpm. The third mixer, which is known as a turbine, was a single disc 230mm in diameter with a saw teeth circumference. The teeth were twisted at right angles to the rotational movement and were dimensioned at about 30 mm x 20 mm. This turbine, which rotated at 1440 rpm, created a very high shear.

All liquids were first mixed in the vessel for several minutes and then the solid fillers were added. Mixing continued for at least half an hour with all three mixers rotating. The energy input increased the mixture temperature and lowered the viscosity to improve the dispersion. When hollow spherical fillers are used it is preferable to turn off the high speed turbine before these are added to prevent the high shear from breaking the spheres.

The accelerator was added to the mixture through a static mixer shortly before it was introduced onto the conveyor. The final addition was the catalyst, which was mixed in with an air powered stirrer.

Final mixing took place in a system of filter trays. Each filter tray was 500mm square and was lined with a steel sieve of 60 mesh. The flow through the upper tray dispersed the mixture into a multitude of small streams. These fell into a dish with a single outlet into a lower filter tray like the first. There was a total of three such stages, with the final filter tray discharging directly onto the lower carrier film of the flat sheet machine.

The resin mix was discharged directly onto a gelled gelcoat of reinforced isophthalic polyester resin which had already been placed on the conveyor.

The sheet was cured by conveying it through an oven into which air was being blown at 120°C. The finished sheet had a surface finish superior to that of sheet made in normal production without a CTBN addition. Furthermore, the sheet was tougher and could be bent round a tighter radius without cracking.

### Example 4

Sheet was produced on the flat sheet machine in a similar way to that in Example 3 except that the sheet was 1.85 mm thick and contained an additional 300 gm/m² of glass woven roving reinforcement.

Woven roving normally causes a pronounced squared pattern on the gelcoat surface but the mixture described created a superior surface at which the woven roving could hardly be detected visually.

It will be appreciated that the invention described above may be modified.

## Claims

1. A composition suitable for reinforcement with glass fibres, comprising a dicyclopentadiene (DCPD) based polyester resin in combination with a carboxyl terminated butadiene acrylonitrile copolymer (CTBN).

2. A composition according to claim 1, comprising 5 to 20 parts by weight CTBN per 100 parts polyester resin.

3. A composition according to claim 1 or 2, comprising 6 to 10 parts by weight CTBN per 100 parts polyester resin.

4. A composition according to claim 1, 2 or 3, further comprising a filler.

5. A composition according to claim 4, comprising 20 to 80 parts by weight filler per 100 parts by weight polyester resin.

6. A composition according to any one of claims 1 to 4, comprising 10 to 50 parts, by volume, filler per 100 parts, by volume, polyester resin.

7. A composition according to claim 4, 5 or 6, wherein the filler comprises calcium carbonate.

8. A composition according to any one of claims 4, 5 and 6, wherein the filler is in the form of hollow microspheres having diameters in the range 3 to 50 micrometers and a density of 1 to 1.2g/ml.

9. A composition according to any preceding claim, further comprising a viscosity modifier.

10. A composition according to any preceding claim further comprising an air release agent.

11. A composition according to any preceding claim, further including glass fibres.

12. A glass reinforced article comprising a cured composition according to claim 11.

13. A glass reinforced article obtainable by mixing a DCPD based polyester resin with a CTBN and with glass fibres, then curing the mixture.

14. A glass reinforced article according to claim 12 or 13, comprising 15 to 40 parts by weight of glass fibres per 100 parts by weight of polyester resin.

15. A method of making a glass reinforced article comprising:
(a) forming a composition comprising a DCPD based polyester resin, a CTBN, and glass fibres;
(b) intimately mixing the components of the composition formed in step (a)
(c) curing the mixed composition formed in step (b) at a pressure no greater than 1.2 atmospheres (122 kPa).

16. A method according to claim 15, wherein the curing in step (c) is carried out at substantially atmospheric pressure (101 kPa).

17. A method according to claim 15 or 16, wherein step (b) includes flowing the composition through a sieve of a size from 40 to 80 mesh.
